# EUROPEAN PATENT APPLICATION

(11) **EP 4 576 852 A1**
(43) Date of publication of application: **25.06.2025**
(21) Application number: 23882160.7
(22) Date of filing: 03.07.2023
(51) Int. Cl.: H04W 8/30, H04W 88/14

(54) **PROCEDURE EXECUTION CONTROL METHOD AND PROGRAM**

(30) Priority: 24.10.2022 JP 2022170132
(71) Applicant: Softbank Corp., Tokyo 105-7529 (JP)
(72) Inventor: HORIBA, Katsuhiro, Tokyo 105-7529 (JP); SHIMA, Keiichi, Tokyo 105-7529 (JP); WATANABE, Hiroki, Tokyo 105-7529 (JP); HASEGAWA, Tomoya, Tokyo 105-7529 (JP); MURATA, Tatsuro, Tokyo 105-7529 (JP); KANAYA, Tomoaki, Tokyo 105-7529 (JP)
(74) Representative: Patentanwaltskanzlei WILHELM & BECK
(86) International application number: PCT/JP2023/024582
(87) International publication number: WO 2024/089943

(57) **Abstract**

This invention reduces congestion in a core network and enables more efficient resource distribution and more flexible operation management. This invention includes the steps of: in a case where a request to initiate one of a plurality of system procedures is given from one of a plurality of terminals carrying out communication via the core network, generating an instance of a program causing a computer to execute processes required from initiation to completion of the one of the plurality of system procedures (S171); allocating, to the instance, a resource related to a processor and a memory of the computer (S172); and upon completion of the one of the plurality of system procedures, writing a process result into a database (S195), the instance being generated so that an instance for each of the plurality of system procedures is generated for each of the plurality of terminals.

## Description

### Technical Field

The present invention relates to a procedure execution control method and a program, specifically, to a procedure execution control method and a program each of which reduces congestion in a core network and enables more efficient resource distribution and more flexible operation management.

### Background Art

Conventionally, as devices constituting a core network in a mobile communication network, the Third Generation Partnership Project (3GPP) standards define network function (NF) parts corresponding to respective roles on the network, and software and the like are developed and implemented. Therefore, even for a single procedure (e.g., a single system procedure), synchronous processes by a plurality of NFs are required.

For example, location registration, which is one of the system procedures in 5G, is provided to a user by synchronous processing carried out by five NFs, specifically, by an Access and Mobility Management Function (AMF), a Session Management Function (SMF), a Policy Control Function (PCF), an Authentication Server Function (AUSF), and a User Data Management (UDM). Meanwhile, focusing on each NF, one NF needs to carry out parallel processing of a plurality of system procedures.

In response to requests from a plurality of pieces of UE, the core network needs to execute a system procedure every time the core network receives the request. Further, there has been proposed a technique for switching, according to characteristics of a terminal, a core network which is a connection destination from one to another (see, for example, Patent Literature 1).

On the other hand, in recent years, core networks become more and more complicated, and accordingly a failure sometimes occur (see, for example, Non-Patent Literature 1).

### Citation List

### [Patent Literature]

[Patent Literature 1]
Japanese Patent Application Publication, Tokukai, No. 2020-053993

### [Non-Patent Literature]

[Non-Patent Literature 1]
*Heisei 30 nendo denki tsuushin jiko ni kansuru kenshou houkoku, denki tsuushin jiko kenshou kaigi* (FY2018 Verification Report on Telecommunications Accidents, Verification Meeting on Telecommunications Accidents)

### Summary of Invention

### Technical Problem

For example, an AMF carry out parallel processing of system procedures including not only the system procedure related to location registration but also session generation and handover, etc. Therefore, if requests for location registration are simultaneously given from a large number of pieces of UE, this gives an influence not only on the process to be carried out in response to the location registration requests but also on the processes to be carried out in response to a session generation request, a handover request, etc.

A possible way to deal with this can be allocating extra hardware resources to the NFs so as to make it possible to carry out simultaneous processing of a large number of system procedures without causing congestion.

However, the situation in which requests are simultaneously given from a large number of pieces of UE is extremely rare. Such a situation can be, for example, a case where a disaster occurs. Thus, if hardware resources are allocated to the NFs redundantly, there is outstanding inefficiency in an operation aspect. Further, during a normal operation state, the redundancy of the hardware resources is large, which can result in reduction in energy efficiency.

An aspect of the present invention has an object to provide a technique of reducing congestion in a core network and enabling more efficient resource distribution and more flexible operation management.

### Solution to Problem

A procedure execution control method in accordance with an aspect of the present invention is a procedure execution control method for controlling execution of a plurality of system procedures of a core network, the procedure execution control method including the steps of: in a case where a request to initiate one of the plurality of system procedures is given from one of a plurality of terminals carrying out communication via the core network, generating an instance of a program causing a computer to execute processes required from initiation to completion of the one of the plurality of system procedures; allocating, to the instance, a resource related to a processor and a memory of the computer; and upon completion of the one of the plurality of system procedures, writing a process result into a database, the instance being generated so that an instance for each of the plurality of system procedures is generated for each of the plurality of terminals.

Each aspect of the present invention may be realized by a computer. In this case, the present invention also includes: a program causing the computer to execute the steps of the above-described method; and a computer-readable storage medium in which the program is stored.

### Advantageous Effects of Invention

In accordance with an aspect of the present invention, it is possible to provide a technique of reducing congestion in a core network and enabling more efficient resource distribution and more flexible operation management.

### Brief Description of Drawings

Fig. 1 is a view illustrating a configuration of a general 5G communication system.
Fig. 2 is a view illustrating a detailed configuration of a network function collection part in a 5G communication system defined by TS.23.501 of 3GPP.
Fig. 3 is a view illustrating an example of allocating extra computational resources to NFs.
Fig. 4 is a view illustrating an example of decreasing computational resources allocated to the NFs.
Fig. 5 is a view illustrating representative system procedures and NFs related to the system procedures.
Fig. 6 is a view illustrating a configuration of a 5G communication system in accordance with a first embodiment.
Fig. 7 is a view illustrating an example of allocation of computational resources in a core network in the 5G communication system in accordance with the first embodiment.
Fig. 8 is a view illustrating a flow of a procedure execution control method in a core network 100.

### Description of Embodiments

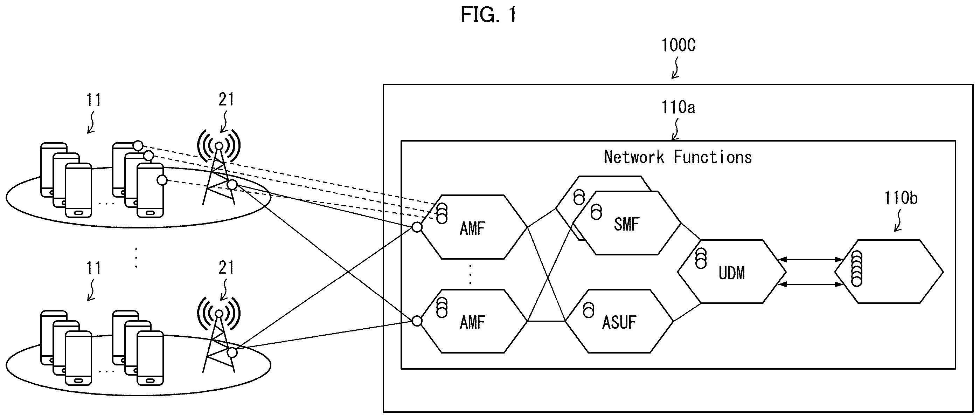

The following description will discuss embodiments of the present invention with reference to the drawings. First, the following will describe a configuration of a conventional, general 5G communication system. Fig. 1 is a view illustrating a configuration of the general 5G communication system.

As shown in Fig. 1, a core network 100C of the 5G communication system is connected with a plurality of base stations 21. Actually, the core network 100C is connected with tens of thousands of base stations 21. The base stations 21 carry out communication with pieces of User Equipment (UE) 11, which are a plurality of terminals located within a cell that is indicated by an ellipse shown in Fig. 1 and that is a given radio communication area. For example, a single base station 21 simultaneously carries out communication with several hundred pieces of UE 11.

As shown in Fig. 1, the core network 100C includes a network function collection part 110a, and the network function collection part 110a includes various kinds of network function parts. The network function collection part 110a includes a User Data Repository (UDR) 110b as a repository in the core network 100C.

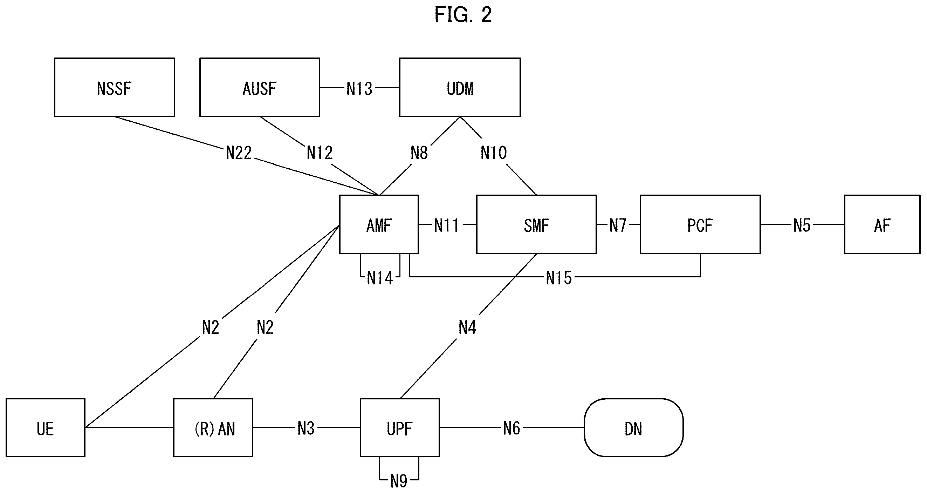

Fig. 2 is a view illustrating a detailed configuration of the network function collection part 110a in a 5G communication system defined by TS.23.501, which is one of the 3GPP standards. As shown in Fig. 2, the network function collection part 110a includes various kinds of network function parts, such as an Access and Mobility Management Function (AMF), a Session Management Function (SMF), a Policy Control Function (PCF), an Authentication Server Function (AUSF), and User Data Management (UDM).

In Fig. 1, only a part of the network function collection part 110a is illustrated. Actually, however, many network function parts are included in the network function collection part 110a, as shown in Fig. 2. Each of the various kinds of network function parts is sometimes referred to as a Network Function (NF). Each NF is configured to execute its corresponding function defined by TS.23.501. For example, each NF executes its corresponding process related to a system procedure defined by TS.23.502. Examples of the system procedure include PDU Session Establishment and PDU Session Release.

An interface used for making connection with the NFs is also standardized. For example, an interface via which the UE and the AMF are connected with each other is defined as "N1", and an interface via which a radio network (RAN) of the base station and the AMF are connected with each other is defined as "N2". The above-described system procedure is completed when transmission and reception of messages are carried out between a plurality of NFs via a given interface and the NFs execute processes based on these messages. The system procedure is typically initiated in response to a request from UE. Then, when the system procedure is completed, a state of the UE is updated on the basis of the process result. The updated state of the UE is distributed and stored in the NFs.

The network function collection part 110a may be constituted by servers corresponding to the NFs. Alternatively, for example, the whole of the network function collection part 110a may be constituted by a plurality of servers such as clouds. Further, each of the NFs may be provided by being implemented as software such as a virtual machine (VM) or a container.

The base station 21 and the UE 11 connected to the core network 100C via the base station are first connected with an AMF in the network function collection part 110a. Thus, in a case where a large number of pieces of UE 11 start communication simultaneously, for example, in the event of a disaster, communication via the N1 interface and the N2 interface is concentrated at the AMF and accordingly congestion may occur. A part where congestion may occur is not limited to the AMF. In case some kind of abnormality occurs in the core network 100C or in case a network path is partially changed for maintenance or the like, processing is concentrated at a certain NF and accordingly congestion may occur.

As described above, the core network 100C in the general 5G communication system has a problem that congestion is likely to occur due to concentration of processing at a certain NF. A possible way to solve the problem can be allocating extra computational resources (e.g., resources related to a processor and a memory) to the NFs.

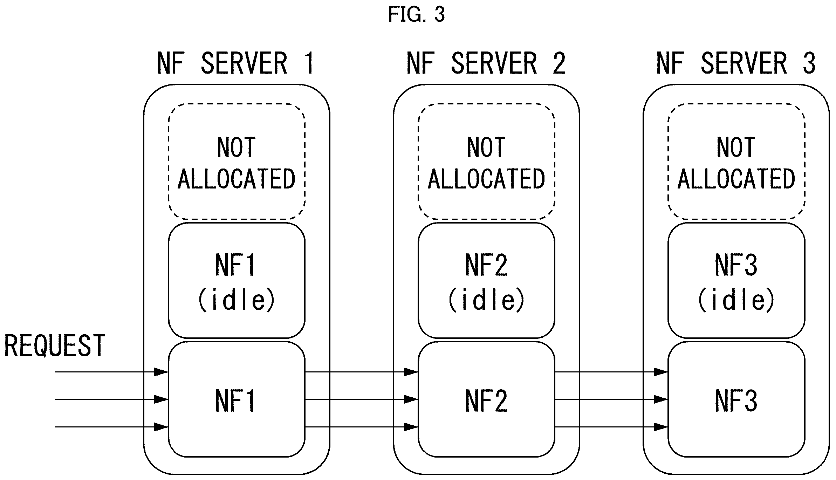

Fig. 3 is a view illustrating an example of allocating extra computational resources to the NFs. In the example shown in Fig. 3, three NFs, specifically, NF 1, NF 2, and NF 3, are respectively constituted by a NF server 1, a NF server 2, and a NF server 3, which are individual servers. Each of the NF servers is configured to have three unit computational resources which can be arbitrarily allocated.

For example, in the NF server 1, one unit computational resource is allocated in order to realize a function of the NF 1, and another unit computational resource is allocated in order to realize a function of the NF 1 (idle). It is assumed here that the NF 1 (idle) is a function which executes a process similar to that of the NF 1, and is configured to execute the process when a process load on the NF 1 becomes excess. Further, in the NF server 1, the other one unit computational resource is not allocated.

In the NF 2 server and the NF 3 server, unit computational resources are allocated in a similar manner to the above.

However, the situation in which requests are simultaneously given from a large number of pieces of UE is extremely rare. Therefore, generally, the NF 1 (idle), the NF 2 (idle), and the NF 3 (idle) would not carry out any process. Thus, if computational resources are allocated to the NFs redundantly in this manner, there is outstanding inefficiency in an operation aspect. Further, the redundancy of the computational resources is large, which can result in reduction in energy efficiency.

Thus, a possible way to deal with this can be, for example, allocating, for a while, the computational resources to the NFs in the manner shown in Fig. 3 and then decreasing the computational resources allocated to the NFs.

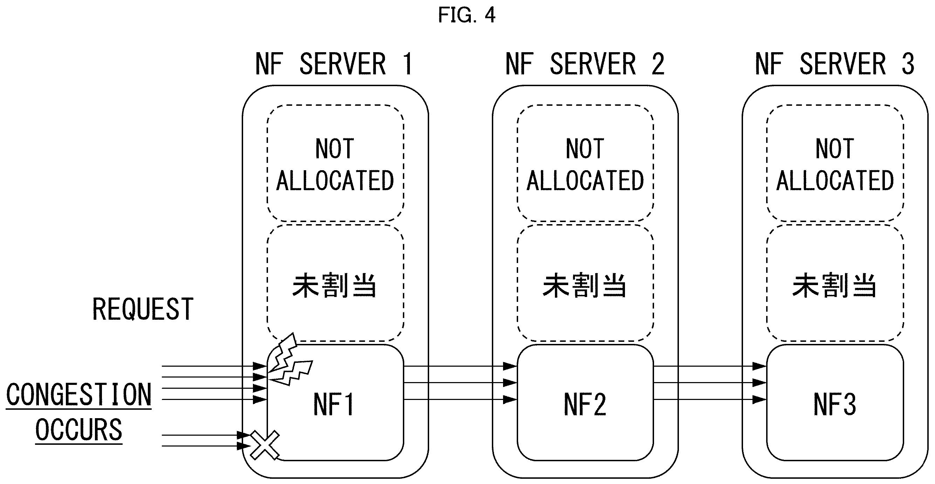

Fig. 4 is a view illustrating an example of decreasing the computational resources allocated to the NFs. In the example shown in Fig. 4, in each of the NF server 1, the NF server 2, and the NF server 3, two unit computational resources are not allocated. With this configuration, however, when a disaster or a failure in the core network 100C occurs, for example, a process load applied to the NF 1 becomes excess and accordingly congestion occurs. Thus, it is necessary to allocate the computational resources to the NFs in the manner shown in Fig. 3 again. In this case, along with increase of the computational resource, it is necessary to carry out a process such as (i) a process of migrating a state for call processing carried out in an existing instance to another instance and/or (ii) a process of transferring, to an arbitrary NF, a signal for call processing coming from UE or a base station.

As described above, in the core network 100C in the general 5G communication system, reallocation of the computational resources to the NFs is often carried out. Carrying out reallocation frequently will lead to increase in the operation load.

Furthermore, the core network 100C in the general 5G communication system has a problem that an influence given when each NF goes down is large. That is, in the core network 100C, various kinds of system procedures are initiated according to requests from the plurality of pieces of UE 11, and the processes related to the system procedures are executed by the NFs. In this case, each NF executes the process for the system procedure related to many pieces of UE 11. Thus, even when only one NF goes down, this gives an influence on many pieces of UE. Further, since an influence given when each NF goes down is large, it is difficult to update the function of each NF, for example.

Moreover, the core network 100C in the general 5G communication system has a problem that, when requests to initiate one system procedure are concentrated, it can be difficult to initiate another system procedure.

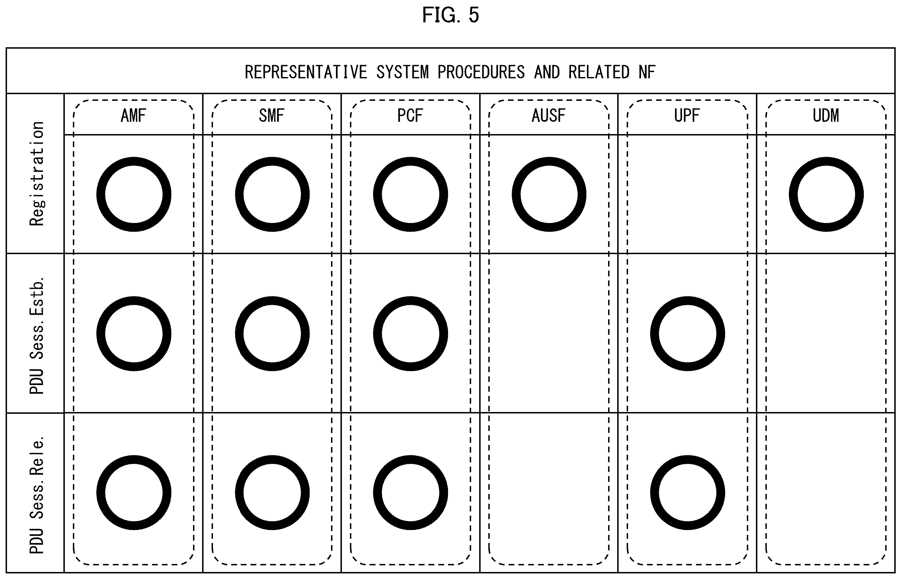

Fig. 5 is a view illustrating representative system procedures and NFs related to the system procedures. In this example, indicated as the system procedures are three system procedures, specifically, Registration, PDU Session Establishment, and PDU Session Release. The details of these system procedures are defined by TS.23.502, which is one of the 3GPP standards.

As shown in Fig. 5, Registration is related to five NFs, specifically, the AMF, the SMF, the PCF, the AUSF, and the UDM. In other words, Registration cannot be completed unless the processes of these five NFs are completed.

PDU Session Establishment is related to four NFs, specifically, the AMF, the SMF, the PCF, and the UPF. PDU Session Release is also related to four NFs, specifically, the AMF, the SMF, the PCF, and the UPF.

In a case where each of the system procedures is carried out in the above-described manner, the following situation may occur. That is, for example, the process is concentrated on Registration and accordingly congestion occurs in the AMF; consequently, it is impossible to initiate PDU Session Establishment. Such a problem is likely to occur, for example, when the computational resource allocated to the AMF is insufficient.

Furthermore, in a case where each of the system procedures is executed in the above-described manner, the computational resources allocated to the NFs cannot be released efficiently. A system procedure is completed when transmission and reception of messages are carried out between a plurality of NFs via a given interface and the NFs execute processes based on these messages. This rises the following problem. That is, until one system procedure is completed, many NFs are kept in an intermediate state, and thus the computational resources allocated to the NFs which are in a standby state cannot be released.

Moreover, in order to avoid occurrence of congestion, an attempt may be made to set priority levels to the system procedures. In this case, it is necessary to set the priority levels to the respective processes which are to be executed by the NFs. Since different NFs execute different processes for Registration, it is difficult to make a setting for causing these processes to be executed according to a consistent order of priority levels.

### <First Embodiment>

In order to solve the above-described problems in the core network in the general 5G communication system, the present embodiment employs a procedure-oriented core network.

### (Configuration of 5G Communication System)

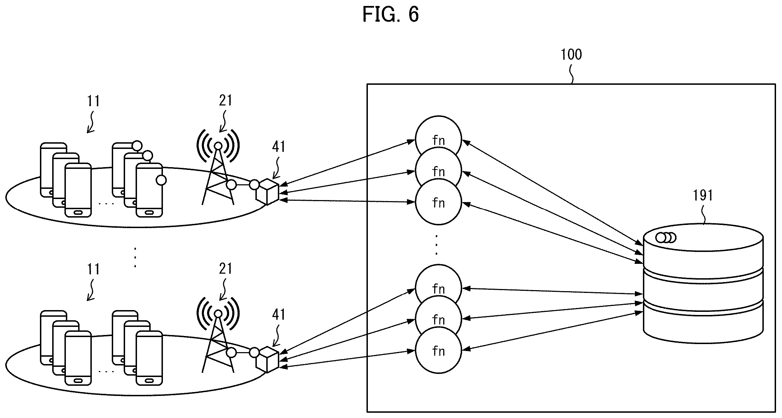

Fig. 6 is a view illustrating a configuration of a 5G communication system in accordance with the present embodiment. As shown in Fig. 6, a core network 100 of the 5G communication system is connected with a plurality of base stations 21. Actually, the core network 100 is connected with tens of thousands of base stations 21. The base stations 21 carry out communication with pieces of User Equipment (UE) 11, which are a plurality of terminals located within a cell that is indicated by an ellipse shown in Fig. 1 and that is a given radio communication area. For example, a single base station 21 carries out communication with several hundred pieces of UE 11 simultaneously.

In the 5G communication system of the present embodiment, each of the base stations 21 is connected to the core network 100 via a N1N2 gateway 41. The N1N2 gateway 41 is a device which relays communication carried out via the N1 interface and the N2 interface. That is, the pieces of UE 11 are connected with the core network 100 via the base stations 12, and the base station 21 is connected with the core network via the N1N2 gateway 41.

The core network 100 may be constituted by, for example, a single server. Alternatively, the core network 100 may be constituted by a plurality of servers such as clouds. Further alternatively, the core network 100 may be provided by being implemented as software such as a virtual machine (VM) or a container.

The N1N2 gateway 41 carries out communication with the base station 21 according to a stateful protocol. The stateful protocol used here is, for example, a Stream Control Transmission Protocol (SCTP). Further, the N1N2 gateway 41 carries out communication with the core network 100 according to a stateless protocol. The stateless protocol used here is a communication protocol in which every request is dealt with as a transaction isolated from a previous request so that communication is constituted by an independent set of a request and a response. That is, any communication protocol in which information related to sessions is not held and a state is not managed can be employed. To be more specific, the stateless protocol may be, for example, a Remote Procedure Call (RPC) or a Message Queue (MQ). Alternatively, the stateless protocol may be a Hypertext Transfer Protocol (HTTP).

That is, it may be configured such that the core network 100 and the N1N2 gateway 41 carry out asynchronous communication with each other. This makes it possible to execute a process related to each system procedure at a speed corresponding to the computational resource allocated in the core network 100.

Meanwhile, the N1N2 gateway 41 carries out communication with the base stations 21 according to the SCTP, and therefore the base stations 21 and the pieces of UE 11 can carry out communication with each other as if the base stations 21 and the pieces of UE 11 were connected to a general core network. In other words, in the 5G communication system in accordance with the present embodiment, it is not necessary to change the base stations 21 and the pieces of UE 11 used in the general 5G communication system.

Assume here that communication between the core network 100 and the N1N2 gateway 41 is carried out according to the MQ. Although not illustrated, the core network 100 is provided with (i) an upLinkMQ 151 in which messages transmitted from the N1N2 gateway 41 are accumulated and (ii) a downLinkMQ 161 in which messages which are to be transmitted to the N1N2 gateway 41 are accumulated.

Note that the upLinkMQ 151 and the downLinkMQ 161 will be respectively referred as "MQ 151" and "MQ 161" as appropriate. Further, in the core network 100, a server, a virtual machine, and/or the like implementing the functions of the MQ 151 and the MQ 161 may be provided as an API gateway. That is, the core network 100 causes messages transmitted from the N1N2 gateway 41 to be accumulated in a first message queue (MQ 151) and asynchronously processes the messages, and the core network 100 causes messages which are to be transmitted to the N1N2 gateway 41 to be accumulated in a second message queue (MQ 161) and asynchronously processes the messages.

Further, assume that, before communication between the UE 11 and the core network 100 is started, a NGAP tunnel via the N1N2 gateway 41 is established between the base station 21 and the core network 100. Consequently, the N1N2 gateway 41 generates, for example, information in which an identifier of the base station 21 and a port number of the SCTP are associated with each other and information in which a Public Land Mobile Network (PLMN)-ID and IP addresses of the upLinkMQ 151 and the downLinkMQ161 are associated with each other, and stores these pieces of information. Therefore, connection via the N1N2 gateway 41 allows the base stations 21 and the pieces of UE 11 to be connected with the general core network 100C or with the core network 100 in accordance with the present embodiment.

For example, when a request to initiate a system procedure is given from a piece of UE 11, the N1N2 gateway 41 generates a NGAP message including a NAS message, and the N1N2 gateway 41 transmits, to the core network 100, (i) an identifier of a base station 21 to be connected with the piece of UE 11 together with (ii) the generated NGAP message. Further, the core network 100 also transmits, to the N1N2 gateway 41, (i) a response to the NGAP message together with (ii) the identifier of the base station 21. With this, it is possible to configure the 5G communication system even without connecting the base station 21 and the core network 100 with each other according to the stateful protocol.

### (Execution Mode of System Procedure)

When a request to initiate a system procedure is given from a piece of UE 11, the core network 100 generates an instance of a program causing a computer to execute processes required from initiation to completion of the system procedure. This program may be a function (which is indicated as "fn" in Fig. 6).

For example, in a case where UE 11-1 gives a request to initiate Registration, a single instance fn-1-Reg corresponding to a function of Registration is generated. Then, in a case where UE 11-2 gives a request to initiate Registration, another instance fn-2-Reg corresponding to a function of Registration is generated.

Further, for example, in a case where the UE 11-1 gives a request to initiate PDU Session Establishment, a single instance fn-1-PSE is generated. Then, in a case where the UE 11-2 gives a request to initiate PDU Session Establishment, another instance fn-2-PSE is generated.

As described above, for each of the plurality of pieces of UE, an instance for each of the plurality of system procedures is generated.

Further, in the core network 100, a computational resource is allocated every time an instance is generated. The "computational resource" herein means a resource related to a processor and a memory of a computer.

Further, in the core network 100, a process related to a system procedure is executed by referring to a state of the UE 11 stored in a database 191. In the database 191, the states of the pieces of UE 11 are stored in advance. In the configuration herein, a piece of UE 11 having given a request to initiate the system procedure is identified, and a state of the identified piece of UE 11 is read from the database 191.

Then, when the system procedure is completed, the state of the piece of UE 11 is updated. The updated state of the piece of UE 11 is stored in the database 191. Then, the instance for the completed system procedure is deleted, and a computational resource therefor is released.

### (Effects of First Embodiment)

As described above, since the core network 100 in the 5G communication system in accordance with the present embodiment is configured such that an instance for each system procedure is generated for each piece of UE 11, it is possible to avoid a situation in which processing is concentrated at a certain NF. Moreover, since communication between the N1N2 gateway 41 and the core network 100 is carried out according to the stateless protocol, a process load at a peak time can be distributed. Therefore, for example, it is possible to reduce occurrence of congestion even without increasing the computational resource.

Furthermore, every time a system procedure is completed, a process result (e.g., a state of UE 11) of a process related to the system procedure is written into the database. Therefore, even in a case where communication according to a stateless protocol (asynchronous communication) is employed, communication between the core network 100 and the UE 11 can be carried out in a similar manner to a case where synchronous communication is employed.

Moreover, an upLinkMQ 151 and a downLinkMQ 161 may be provided for each system procedure. That is, MQs may be provided such that an upLinkMQ 151-1 and a downLinkMQ 161-1 are provided for Registration and an upLinkMQ 151-2 and a downLinkMQ 161-2 are provided for PDU session establishment, .... With such a configuration, it is possible to easily set priority levels of the system procedures, for example.

Furthermore, since the core network 100 in the 5G communication system in accordance with the present embodiment is configured such that an instance of each system procedure is generated for each piece of UE 11, it is possible to easily carry out processes such as updating of a function of the core network. For example, each instance may be generated by activating a container corresponding to a respective procedure. With such a configuration, by updating a function corresponding to the respective procedure and storing the updated function in the container, it is possible to update the function independently of a system procedure which is under execution.

Moreover, even when one instance stops, only one system procedure related to one piece of UE 11 stops. Thus, it is possible to drastically reduce a range to be influenced, as compared to the core network 100C in the general 5G communication system.

Further, in the core network 100 in the 5G communication system in accordance with the present embodiment, every time a request to initiate a system procedure is given from a piece of UE 11, an instance for the system procedure is generated and a computational resource is allocated. This makes it possible to allocate the computational resource without excess and deficiency.

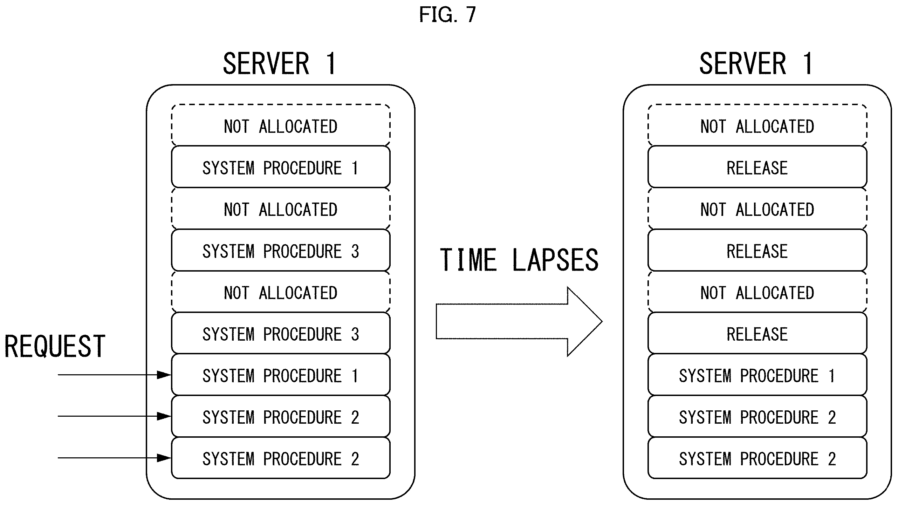

Fig. 7 is a view illustrating an example of allocation of computational resources in the core network 100 in the 5G communication system in accordance with the present embodiment. In this example, for simple explanation, it is assumed that the core network 100 is constituted by one server 1. Further, it is also assumed that the server 1 has nine unit computational resources.

As illustrated on the left side in Fig. 7, in the server 1, an instance for one system procedure 1 and instances for two system procedures 3 are generated. It is assumed that, in response to an initiation request (request) from a piece of UE 11, a new instance for the one system procedure 1 and new instances for the two system procedures 2 have been just generated.

As the time lapses, the instances in the server 1 are changed into the ones illustrated on the right side in Fig. 7. That is, upon completion of the system procedure, the originally-generated instance for the one system procedure 1 and the originally-generated instances for the two system procedures 3 are deleted. Then, the unit computational resources having been allocated to these instances are released.

Allocating the computational resources in a dynamic manner as described above enables more efficient operation. In particular, with the configuration in which an instance is generated for each piece of UE, a unit computational resource required by each instance can be made smaller. Thus, this configuration enables more flexible allocation of the computational resources, for example, as compared to the case where allocation of the computational resources is carried out for each NF as in the core network 100C in the general 5G communication system.

As described above, the 5G communication system in accordance with the present embodiment reduces congestion in a core network and enables more efficient resource distribution and more flexible operation management.

### (Flow of Procedure Execution Control Method)

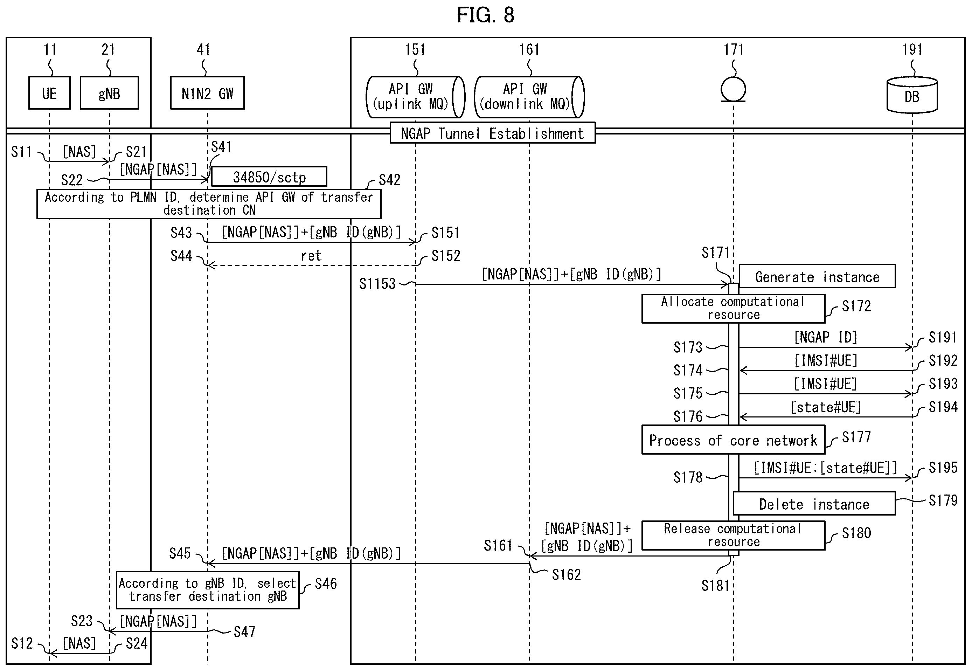

Next, the following description will discuss a flow of a specific process in the core network 100 in the 5G communication system in accordance with the present embodiment. Fig. 8 is a view illustrating a flow of the procedure execution control method in the core network 100 in the 5G communication system in accordance with the present embodiment. The procedure execution control method is a method for controlling execution of a plurality of system procedures defined by TS.23.502, which is one of the 3GPP standards.

First, a Next Generation Application Protocol (NGAP) tunnel via the N1N2 gateway 41 is established between a base station 21 and the core network 100. This is indicated as "NGAP Tunnel Establishment" in Fig. 8.

In step S11, a piece of UE 11 transmits, to the base station 21, a request to initiate a certain system procedure. In step S21, the request is received by the base station 21. The request to initiate the system procedure is transmitted as a Non Access Stratum (NAS) message. Note that the base station 21 is also referred to as "gNB 21".

In step S22, the base station 21 generates a NGAP message including the NAS message received in step S21, and transmits the NGAP message to the N1N2 gateway 41. Here, the transmission of the NGAP message is carried out according to a stateful protocol (SCTP).

Note that the processes in step S11, step S21, and step S22 are the same as those in the conventional, general 5G communication system.

The N1N2 gateway 41 receives, in step S41, the NGAP message transmitted in step S22, and stores a port number "34850" of a SCTP corresponding to the base station 21 that has transmitted the NGAP message. Further, the N1N2 gateway 41 generates information in which the port number "34850" and an identifier of the base station 21 are associated with each other, and stores the information. Note that the identifier of the base station 21 is included in NGsetupRequest transmitted from the base station 21 at the time of establishment of the NGAP tunnel.

In step S42, the N1N2 gateway 41 identifies, on the basis of a PLMN-ID included in the NGAP message, an IP address of a MG 151 to which the NGAP message is to be transmitted. It is assumed that the N1N2 gateway 41 stores therein information such as a table in which a PLMN-ID and an IP address of a MQ are associated with each other in advance.

In step S43, the N1N2 gateway 41 transmits, to the MQ 151, the identifier of the base station 21 together with the NGAP message received in step S41. In step S151, the NGAP message and the identifier of the base station 21 are received. Here, the transmission of the NGAP message is carried out according to a stateless protocol (in this case, MQ).

In step S152, the MQ 151 transmits a response (ret) to the N1N2 gateway 41. In step S44, the response is received.

In step S153, the MQ 151 supplies, to a procedure processing section 171, the NGAP message received in step S151 and the identifier of the base station 21. In step S171, the NGAP message and the identifier of the base station 21 are received by the procedure processing section 171.

The procedure processing section 171 analyzes the NAS message included in the NGAP message obtained in step S171, so as to identify the system procedure requested by the piece of UE 11. Then, the procedure processing section 171 calls a function fn corresponding to the system procedure, so as to generate an instance. As described above, the function fn is a program for causing a computer to execute the processes required from initiation to completion of the system procedure.

In step S172, the procedure processing section 171 allocates a computational resource to the instance generated in step S171.

That is, when a request to initiate a system procedure is given from a piece of UE 11, an instance of a program causing a computer to execute processes required from initiation to completion of the system procedure is generated, and a resource related to a processor and a memory of the computer is allocated to the instance. Further, as described above, for each of the plurality of pieces of UE, an instance for each of the plurality of system procedures is generated.

In step S173, the procedure processing section 171 inquires the database 191 of a subscriber identifier (IMSI) of the piece of UE 11 on the basis of the NGAP-ID included in the NGAP message obtained in step S171. In step S191, this is received.

In step S192, the database 191 identifies the subscriber identifier of the piece of UE 11, and gives a response to the procedure processing section 171. In step S174, this is received by the procedure processing section 171.

In step S175, the procedure processing section 171 inquires the database 191 of the state of the piece of UE 11 on the basis of the subscriber identifier obtained in step S174. In step S193, this is received.

In step S194, the database 191 identifies the state of the piece of UE 11, and gives a response to the procedure processing section 171. In step S176, this is received by the procedure processing section 171.

In step S177, the procedure processing section 171 executes a process of the core network. For example, the procedure processing section 171 executes a process related to the system procedure identified in step S171. Consequently, the system procedure that is requested to be initiated by the piece of UE 11 in step S11 is completed, and the state of the piece of UE 11 obtained in step S176 is changed.

In step S178, the procedure processing section 171 gives an instruction to the database 191 to update, to the changed state, the state of the piece of UE 11 corresponding to the subscriber identifier obtained in step S174.

In step S195, the database 191 writes the changed state in accordance with the instruction received in step S178. That is, upon completion of the system procedure, the process result obtained in step S177 is written into the database 191. As the process result, for example, the information related to the state of the piece of UE 11 that has given the request to initiate the system procedure is written into the database.

In step S179, the procedure processing section 171 deletes the instance generated in step S171.

In step S180, the procedure processing section 171 releases the computational resource allocated in step S172.

In step S181, the procedure processing section 171 generates, as a response to the NGAP message obtained in step S171, a NGAP message including the NAS message, and supplies, to the MQ 161, the identifier of the base station 21 obtained in step S171 together with the NGAP message thus generated. In step S161, the identifier of the base station 21 and the NGAP message are obtained by the MQ 161.

In step S162, the MQ 161 transmits, to the N1N2 gateway 41, the NGAP message and the identifier of the base station 21 obtained in step S161. In step S45, the NGAP message and the identifier of the base station 21 are received.

In step S46, the N1N2 gateway 41 identifies, on the basis of the identifier of the base station 21 received in step S45, the base station 21 to which the NGAP message is to be transmitted.

In step S47, the N1N2 gateway 41 transmits, to the base station 21 identified in step S46, the NGAP message received in step S45. In step S23, the NGAP message is received.

In step S24, the base station 21 transmits, to the piece of UE 11, the NAS message included in the NGAP message received in step S23. In this process, the piece of UE 11 to which the NAS message is to be transmitted is identified, for example, by referring to the NGAP-ID included in the NGAP message.

In the above-described manner, the process in the core network 100 in the 5G communication system in accordance with the present embodiment is executed.

### <Second Embodiment>

In the example previously described with reference to Fig. 6, the N1N2 gateway 41 is connected with one core network 100. Alternatively, for example, the N1N2 gateway 41 may be connected with a plurality of core networks.

For example, the N1N2 gateway 41 may be connected with the core network 100 and the core network 100C in the general 5G communication network. In a case where a piece of UE 11 carries out communication with the core network 100C, the N1N2 gateway 41 may carry out communication with the base station 21 according to the stateful protocol (SCTP) and may carry out communication with the core network 100C according to the stateful protocol (SCTP), too.

Further, the N1N2 gateway 41 can be connected with three or more core networks operated by different communication business operators. With such a configuration, a plurality of communication business operators can share an existing base station.

In the example described with reference to Fig. 6, one N1N2 gateway 41 is provided for one base station 21. Alternatively, one N1N2 gateway 41 may be provided for a plurality of base stations 21.

### <Others>

The N1N2 gateway 41 and the core network 100 described above can be realized by a program installed on a computer, the program causing the computer to function as the N1N2 gateway 41 and the core network 100. In this case, the N1N2 gateway 41 and the core network 100 include, as hardware for executing the program, a computer which includes (i) at least one control device (e.g., processor) and (ii) at least one storage device (e.g., memory).

By executing the program with the control device and the storage device, the functions described in the foregoing embodiments are realized. The program can be stored in one or more non-transitory computer-readable storage media. The storage medium can be provided in the device, or the storage medium does not need to be provided in the device. In the latter case, the program can be supplied via an arbitrary wired or wireless transmission medium.

A part of or all of the functions can also be realized by a logical circuit. For example, an integrated circuit on which a logical circuit functioning as the control blocks is formed may also be encompassed in the present invention. Further, the functions of the control blocks can also be realized by a quantum computer, for example.

The description in the foregoing embodiments has dealt with the example in which the present invention is applied to the 5G communication system. However, the present invention is applicable to communication systems of 4G and prior generations. Further, the present invention is also applicable to communication systems of 6G and subsequent generations, provided that these communication systems can be configured in units of NFs.

Further, since the above-described aspects of the present invention give the foregoing effects, it is possible to contribute to achievement of Goal 9 "Build resilient infrastructure, promote inclusive and sustainable industrialization and foster innovation." of Sustainable Development Goals (SDGs).

The present invention is not limited to the foregoing embodiments, but can be altered by a skilled person in the art within the scope of the claims. The present invention also encompasses, in its technical scope, any embodiment derived by combining technical means disclosed in differing embodiments.

Aspects of the present invention can also be expressed as follows:
A procedure execution control method in accordance with a first aspect of the present invention is a procedure execution control method for controlling execution of a plurality of system procedures of a core network, the procedure execution control method including the steps of: in a case where a request to initiate one of the plurality of system procedures is given from one of a plurality of terminals carrying out communication via the core network, generating an instance of a program causing a computer to execute processes required from initiation to completion of the one of the plurality of system procedures; allocating, to the instance, a resource related to a processor and a memory of the computer; and upon completion of the one of the plurality of system procedures, writing a process result into a database, the instance being generated so that an instance for each of the plurality of system procedures is generated for each of the plurality of terminals.

A procedure execution control method in accordance with a second aspect of the present invention is configured such that, in the first aspect, the plurality of terminals are connected with the core network via a base station; and the base station is connected with the core network via a gateway device.

A procedure execution control method in accordance with a third aspect of the present invention is configured such that, in the second aspect, the gateway device carries out communication with the base station according to a stateful protocol; and the gateway device carries out communication with the core network according to a stateless protocol.

A procedure execution control method in accordance with a fourth aspect of the present invention is configured such that, in the third aspect, the stateful protocol is a Stream Control Transmission Protocol (SCTP); and the stateless protocol is a Remote Procedure Call (RPC) or a Message Queue (MQ).

A procedure execution control method in accordance with a fifth aspect of the present invention is configured such that, in the third or fourth aspect, the procedure execution control method further includes the step of: identifying, by referring to a Non Access Stratum (NAS) message included in a Next Generation Application Protocol (NGAP) message transmitted from the base station to the core network, the one of the plurality of system procedures that is requested to be initiated by the one of the plurality of terminals.

A procedure execution control method in accordance with a sixth aspect of the present invention is configured such that, in the fifth aspect, the gateway device transmits, to the core network, (i) information indicative of an identifier of the base station together with (ii) the NGAP message.

A procedure execution control method in accordance with a seventh aspect of the present invention is configured such that, in any one of the third to sixth aspects, the core network causes messages transmitted from the gateway device to be accumulated in a first message queue and asynchronously processes the messages; and the core network causes messages which are to be transmitted to the gateway device to be accumulated in a second message queue and asynchronously processes the messages.

A procedure execution control method in accordance with an eighth aspect of the present invention is configured such that, in any one of the first to seventh aspects, the instance is generated by activating a container corresponding to the one of the plurality of system procedures.

A procedure execution control method in accordance with a ninth aspect of the present invention is configured such that, in any one of the first to eighth aspects, as the process result, information related to a state of the one of the plurality of terminals that has given the request to initiate the one of the plurality of system procedures is written into the database.

A procedure execution control method in accordance with a tenth aspect of the present invention is configured such that, in any one of the first to ninth aspects, the procedure execution control method further includes the step of: upon completion of the one of the plurality of system procedures, releasing the resource which is related to the processor and the memory of the computer and which has been allocated to the instance.

A program in accordance with an eleventh aspect of the present invention is a program causing a computer to execute a procedure execution control method for controlling execution of a plurality of system procedures of a core network, the procedure execution control method including the steps of: in a case where a request to initiate one of the plurality of system procedures is given from one of a plurality of terminals carrying out communication via the core network, generating an instance of a program causing the computer to execute processes required from initiation to completion of the one of the plurality of system procedures; allocating, to the instance, a resource related to a processor and a memory of the computer; and upon completion of the one of the plurality of system procedures, writing a process result into a database, the instance being generated so that an instance for each of the plurality of system procedures is generated for each of the plurality of terminals.

### Reference Signs List

11: UE
21: base station
41: N1N2 gateway
100: core network
151: upLinkMQ
161: downLinkMQ
171: procedure processing section
191: database

## Claims

1. A procedure execution control method for controlling execution of a plurality of system procedures of a core network, the procedure execution control method comprising the steps of:
in a case where a request to initiate one of the plurality of system procedures is given from one of a plurality of terminals carrying out communication via the core network, generating an instance of a program causing a computer to execute processes required from initiation to completion of the one of the plurality of system procedures;
allocating, to the instance, a resource related to a processor and a memory of the computer; and
upon completion of the one of the plurality of system procedures, writing a process result into a database,
the instance being generated so that an instance for each of the plurality of system procedures is generated for each of the plurality of terminals.

2. The procedure execution control method according to claim 1, wherein:
the plurality of terminals are connected with the core network via a base station; and
the base station is connected with the core network via a gateway device.

3. The procedure execution control method according to claim 2, wherein:
the gateway device carries out communication with the base station according to a stateful protocol; and
the gateway device carries out communication with the core network according to a stateless protocol.

4. The procedure execution control method according to claim 3, wherein:
the stateful protocol is a Stream Control Transmission Protocol (SCTP); and
the stateless protocol is a Remote Procedure Call (RPC) or a Message Queue (MQ).

5. The procedure execution control method according to claim 3 or 4, further comprising the step of:
identifying, by referring to a Non Access Stratum (NAS) message included in a Next Generation Application Protocol (NGAP) message transmitted from the base station to the core network, the one of the plurality of system procedures that is requested to be initiated by the one of the plurality of terminals.

6. The procedure execution control method according to claim 5, wherein:
the gateway device transmits, to the core network, (i) information indicative of an identifier of the base station together with (ii) the NGAP message.

7. The procedure execution control method according to any one of claims 3 to 6, wherein:
the core network causes messages transmitted from the gateway device to be accumulated in a first message queue and asynchronously processes the messages; and
the core network causes messages which are to be transmitted to the gateway device to be accumulated in a second message queue and asynchronously processes the messages.

8. The procedure execution control method according to any one of claims 1 to 7, wherein:
the instance is generated by activating a container corresponding to the one of the plurality of system procedures.

9. The procedure execution control method according to any one of claims 1 to 8, wherein:
as the process result, information related to a state of the one of the plurality of terminals that has given the request to initiate the one of the plurality of system procedures is written into the database.

10. The procedure execution control method according to any one of claims 1 to 9, further comprising the step of:
upon completion of the one of the plurality of system procedures, releasing the resource which is related to the processor and the memory of the computer and which has been allocated to the instance.

11. A program causing a computer to execute a procedure execution control method for controlling execution of a plurality of system procedures of a core network, the procedure execution control method comprising the steps of:
in a case where a request to initiate one of the plurality of system procedures is given from one of a plurality of terminals carrying out communication via the core network, generating an instance of a program causing the computer to execute processes required from initiation to completion of the one of the plurality of system procedures;
allocating, to the instance, a resource related to a processor and a memory of the computer; and
upon completion of the one of the plurality of system procedures, writing a process result into a database,
the instance being generated so that an instance for each of the plurality of system procedures is generated for each of the plurality of terminals.
